# EUROPEAN PATENT APPLICATION

(11) **EP 4 618 554 A1**
(43) Date of publication of application: **17.09.2025**
(21) Application number: 23888135.3
(22) Date of filing: 10.11.2023
(51) Int. Cl.: H04N 21/2187, H04N 21/431, H04N 21/478

(54) **LIVE-BROADCAST ROOM PAGE DISPLAY METHOD AND APPARATUS, AND ELECTRONIC DEVICE AND STORAGE MEDIUM**

(30) Priority: 10.11.2022 CN 202211407240
(71) Applicant: Beijing Zitiao Network Technology Co., Ltd., Beijing 100190 (CN)
(72) Inventor: LI, Linxing, Beijing 100028 (CN)
(74) Representative: Grünecker Patent- und Rechtsanwälte PartG mbB
(86) International application number: PCT/CN2023/131113
(87) International publication number: WO 2024/099450

(57) **Abstract**

The embodiments of the disclosure provide a method, apparatus, electronic device and storage medium for displaying a live stream page, by displaying a live stream page, the live stream page including a first area and a second area, wherein the first area is configured to display a live stream video; displaying a target interaction component in the second area based on content of the live stream video displayed in the first area, the target interaction component being configured to perform, after triggered, a component function corresponding to the live stream video. Since the interaction components required by the user are different in different phases of the live stream, the corresponding target interaction component is determined through the content of the live stream video, so that when different live stream videos are played, the corresponding target interaction component is displayed, the dynamic display of the interaction component is realized, the interaction efficiency when the user triggers the corresponding interaction component in different phases of the live stream is improved, the concentration degree of the interaction component triggered by the user in the live streaming is higher, and the direct interaction effect of the user in the live streaming is improved.

## Description

This application claims the priority of Chinese Patent Application No. 2022114072404, filed on Nov. 10, 2022, entitled "Method, Apparatus, Electronic Device and Storage Medium for Displaying a Live stream page", the entire content of which is incorporated herein by reference.

### FIELD

The embodiment of the present disclosure relates to the technical field of Internet, in particular to a method, apparatus, electronic device and storage medium for displaying a live stream page.

### BACKGROUND

Currently, in a live stream application of an competitive competition event type, a user may enter a competition live streaming through a live stream application client running on the terminal device to watch a live stream video of a game, in this process, in addition to a window area for playing the live stream video, the live stream application client is further provided with a related function area, and the user implements corresponding interaction functions such as speaking, like and the like by triggering an interaction component in the function area.

However, in the solution in the prior art, the interaction component is fixedly arranged in the function area, and the problems of low operation efficiency and poor interaction effect exist.

### SUMMARY

The embodiment of the present disclosure provides a method, apparatus, electronic device and storage medium for displaying a live stream page, and aims to overcome the problems of low operation efficiency and poor interaction effect of interaction components in a live stream page.

According to a first aspect, an embodiment of the present disclosure provides a method for displaying a live stream page, comprising:
displaying a live stream page, the live stream page comprising a first area and a second area, wherein the first area is configured to display a live stream video; and displaying a target interaction component in the second area based on content of the live stream video displayed in the first area, the target interaction component being configured to perform, after triggered, a component function corresponding to the live stream video.

According to a second aspect, an embodiment of the present disclosure provides an apparatus for displaying a live stream page, comprising:
a display module configured to display a live stream page, the live stream page comprising a first area and a second area, wherein the first area is configured to display a live stream video;
a processing module configured to display a target interaction component in the second area based on content of the live stream video displayed in the first area, the target interaction component being configured to perform, after triggered, a component function corresponding to the live stream video.

According to a third aspect, an embodiment of the present disclosure provides an electronic device, comprising:
a processor, and a memory communicatively connected to the processor;
the memory storing computer-executable instructions;
the processor executing the computer-executable instructions stored in the memory to implement the method for displaying a live stream page according to the first aspect and various possible designs of the first aspect.

According to a fourth aspect, an embodiment of the present disclosure provides a computer-readable storage medium, wherein the computer-readable storage medium stores computer-executable instructions, the computer-executable instructions, when executed by a processor, implement the method for displaying a live stream page according to the first aspect and various possible designs of the first aspect is implemented.

According to a fifth aspect, an embodiment of the present disclosure provides a computer program product, comprising a computer program, wherein the computer program, when executed by a processor, implements the method for displaying a live stream page according to the first aspect and various possible designs of the first aspect.

The present disclosure provides a method, apparatus, electronic device and storage medium for displaying a live stream page: displaying a live stream page, the live stream page comprising a first area and a second area, wherein the first area is configured to display a live stream video; displaying a target interaction component in the second area based on content of the live stream video displayed in the first area, the target interaction component being configured to perform, after triggered, a component function corresponding to the live stream video. Since the interaction components required by the user are different in different phases of the live stream, the corresponding target interaction component is determined through the content of the live stream video, so that when different live stream videos are played, the corresponding target interaction component is displayed, the dynamic display of the interaction component is realized, the interaction efficiency when the user triggers the corresponding interaction component in different phases of the live stream is improved, the concentration degree of the interaction component triggered by the user in the live streaming is higher, and the direct interaction effect of the user in the live streaming is improved.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is an application scenario diagram of a method for displaying a live stream page according to an embodiment of the present disclosure;
FIG. 2 is a schematic flowchart 1 of a method for displaying a live stream page according to an embodiment of the present disclosure;
FIG. 3 is a schematic diagram of a live stream page according to an embodiment of the present disclosure;
FIG. 4 is a schematic diagram of another live stream page according to an embodiment of the present disclosure;
FIG. 5 is a schematic diagram of displaying a second area according to an embodiment of the present disclosure;
FIG. 6 is a flowchart of a specific implementation manner of step S102 in the embodiment shown in FIG. 2;
FIG. 7 is a schematic diagram of a process of displaying a target interaction component according to an embodiment of the present disclosure;
FIG. 8 is a schematic flowchart 2 of a method for displaying a live stream page according to an embodiment of the present disclosure;
FIG. 9 is a flowchart of a specific implementation manner of step S204 in the embodiment shown in FIG. 7;
FIG. 10 is a schematic diagram of determining a position of a target interaction component based on live stream event information according to an embodiment of the present disclosure;
FIG. 11 is a structural block diagram of an apparatus for displaying a live stream page according to an embodiment of the present disclosure;
FIG. 12 is a schematic structural diagram of an electronic device according to an embodiment of the present disclosure;
FIG. 13 is a schematic diagram of a hardware structure of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. The described embodiments are a part of the embodiments of the present disclosure, rather than all of the embodiments. All other embodiments obtained by those skilled in the art based on the embodiments of the present disclosure without creative efforts shall fall within the scope of the present disclosure.

The following describes an application scenario of an embodiment of the present disclosure.

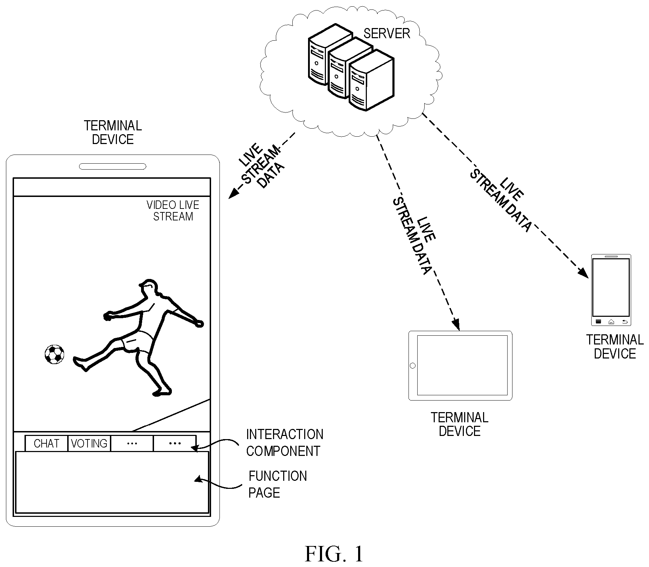

FIG. 1 is an application scenario diagram of a method for displaying a live stream page according to an embodiment of the present disclosure. As shown in FIG. 1, the method provided in the embodiments of the present disclosure may be applied to a terminal device, the terminal device runs a client of a live stream application, the terminal device communicates with a server running the live stream server, the server sends the live stream data to the terminal device, the terminal device obtains the live stream data and plays it in the client page, to implement the video live stream of a competition event such as a football game, a basketball game, an electronic sports game, and the like. The live stream page of the live stream application client is provided with an interaction component for implementing inter-user interaction, for example, the "chat" component and the "voting" component shown in the figure, after the user triggers the corresponding interaction component by operating the terminal device, the live stream application client executes a corresponding target function, for example, displays a function page corresponding to the "chat" component, or displays a function page corresponding to the "voting" component.

In the prior art, the interaction component is usually set fixed, that is, before the live streaming is started, the live streaming is configured through the server, one or more interaction components displayed fixed are set, and after the live streaming is started, and after the user enters the live stream page through the live stream application client, several corresponding fixed target functions are executed based on the fixed several interaction components provided by the live streaming. However, in the application scenario of live event live stream, the live stream process of the live streaming on the event may be divided into at least several live stream phases, for example, before the start of the game, the middle of the game, and the end of the game, in different live stream phases, the interaction components required by the user are different, for example, during the live stream phase before the start of the game, the user in the live streaming needs to use the interaction component of "game voting"; and in the live stream phase of during the game, the user in the live streaming needs to use the interaction component of "chat". In this scenario, in different live stream phases, the user can only trigger a corresponding required interaction component from all types of interaction components supported in the live stream page through manual selection, and is limited to a limited display space in the live stream page, and most interaction components are in a folded state, which further reduces the operation efficiency in the selection process of the interaction component, and causes problems of low operating efficiency and poor interaction effect.

The embodiment of the present disclosure provides a method for displaying a live stream page to solve the problem.

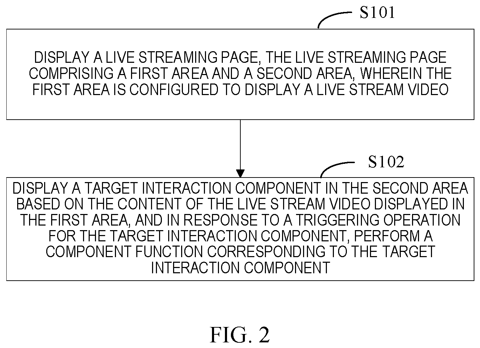

Referring to FIG. 2, FIG. 2 is a schematic flowchart 1 of a method for displaying a live stream page according to an embodiment of the present disclosure. The method in this embodiment may be applied to a terminal device or a server. Take the terminal device as an example, the method comprises:
Step S101: displaying a live stream page, the live stream page comprising a first area and a second area, wherein the first area is configured to display a live stream video.

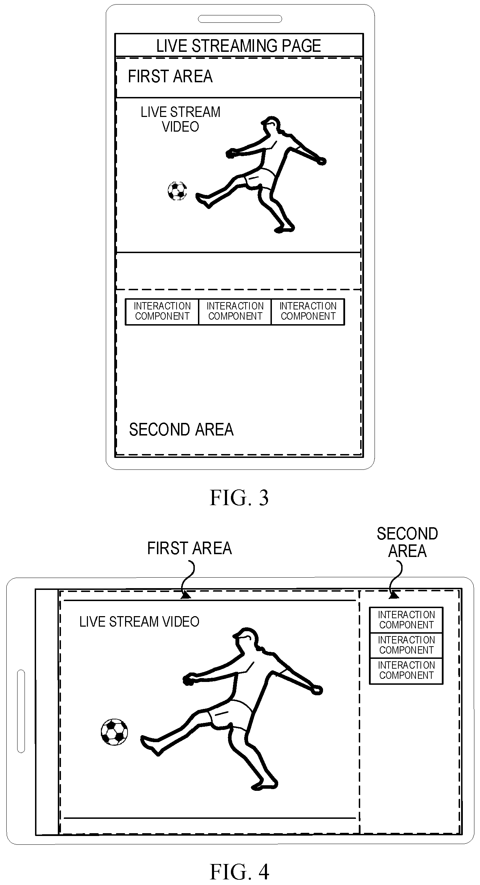

For example, the execution body of the method in this embodiment is a terminal device, for example, a smart phone, and referring to a schematic diagram of an application scenario shown in FIG. 1, a client running a live stream application in the terminal device, after the user enters the corresponding live streaming through the client, a live stream page is displayed in a client of the terminal device. FIG. 3 is a schematic diagram of a live stream page according to an embodiment of the present disclosure. As shown in FIG. 3, a first area and a second area are comprised in the live stream page. For example, the first area is positioned at the upper part of the live stream page, and the second area is positioned at the lower part of the live stream page. Wherein, the first area is configured to display a live stream video, such as a football game, a basketball game, or the like, and the second area is configured to display an interaction component related to the live stream video, such as a public chat channel component, a game lineup display component, or the like.

Further, according to the device posture of the terminal device, the positional relationship between the first area and the second area changes accordingly. FIG. 4 is a schematic diagram of another live stream page according to an embodiment of the present disclosure, referring to an embodiment situation in which the device posture shown in FIG. 3 is a portrait screen state, as shown in FIG. 4, exemplarily, in a state where the device posture is a landscape screen state, the first area and the second area are arranged left and right, the first area used for playing the live stream video is positioned on the left side of the live stream page, and the second area used for displaying the interaction component is positioned on the right side of the live stream page. In the application scenario of live event live stream, by setting the first area and the second area left and right in the landscape screen state, the picture size of the live stream video (game video) can be better adapted, and on the basis of improving the visual impression, the interaction function in the live stream page is ensured to be normally implemented.

In step S102, display a target interaction component in the second area based on the content of the live stream video displayed in the first area, the target interaction component being configured to perform, after triggered, a component function corresponding to the live stream video.

For example, when the content of the live stream video is displayed in the first area, in the second area, the interaction component that matches the content of the live stream video is correspondingly displayed, that is, the target interaction component, and after the target interaction component is triggered, the displayed component content is the component function for the live stream video. The second area may include one or more target interaction components, and in the scenario that only the target interaction component corresponding to the content of the live stream video is included in the second area, performing the component function corresponding to the live stream video may specifically include: displaying, in the second area, the component name and the component content of the target interaction component; and in the scenario that the second area includes the plurality of target interaction components, executing the component function corresponding to the live stream video, exemplarily specifically including: displaying, in the second area, the component names of the plurality of target interaction components corresponding to the content of the live stream video, and the component content of the currently triggered target interaction component.

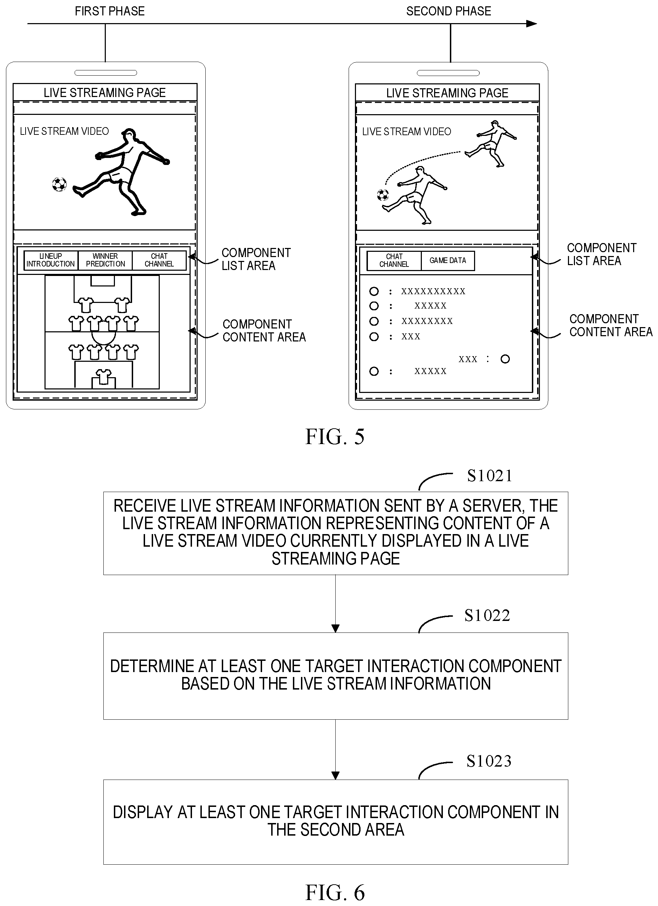

For example, when the content of the live stream video is # 1, the interaction component A, the interaction component B and the interaction component C are displayed in the second area, wherein the interaction component A is triggered to display the component content of the interaction component A; when the content of the live stream video is # 2, the interaction component A and the interaction component D are displayed in the second area, the interaction component D is triggered, and the component content of the interaction component D is displayed. FIG. 5 is a schematic diagram of displaying a second area according to an embodiment of the present disclosure, as shown in FIG. 5, the second area includes a component list area and a component content area, and when the football game is used as an example, before the game starts, FIG. 5 shows a first phase, and the content of the live stream video displayed in the first area is an introduction of team players and a lineup of the two parties, correspondingly, in a component list area in the second area, the corresponding target interaction components including "lineup introduction", "winner prediction", and "channel chat" are displayed. In the component content area, component content corresponding to the currently triggered target interaction component is displayed, as shown in FIG. 5, the currently triggered target interaction component is "lineup introduction", and in a corresponding component content area, for example, a team lineup of the team Team _ 1 is displayed. When the user clicks another target interaction component in the component list area, the component content area is triggered to display the corresponding component content, for example, when "channel chat" is clicked, the component content corresponding to the interaction component of "channel chat" is displayed in the component content area, for example, the user's speech (not shown) in the live streaming.

After the game starts, as shown in FIG. 5 as a second stage, the content of the live stream video displayed in the first area is the specific match condition of the football game, correspondingly, in the component list area in the second area, the corresponding target interaction components includes "channel chat" and "game data", wherein, the currently triggered target interaction component is "channel chat", and the component content corresponding to the interaction component of "channel chat" is displayed in the corresponding component content area. Similarly, when the user clicks another target interaction component in the component list area, the component content area is triggered to display the corresponding component content, and details are not described herein again.

It should be noted that, the specific implementation form of the component content of the interaction component "lineup introduction" shown in FIG. 5 is merely an example, and the specific implementation form of the component content of the interaction component such as "lineup introduction", "winner prediction", "channel chat", and "game data" may be flexibly set according to needs, which is not specifically limited herein, and details are not described herein again.

Further, in a possible implementation manner, when a plurality of target interaction components are included in the component list area, according to the content of the live stream video, the client of the terminal device determines a default target interaction component as the currently triggered target interaction component, for example, before the game starts, the determined default triggered target interaction component is the interaction component A (for example, the "lineup introduction" interaction component), and after the game starts, the determined default triggered target interaction component is the interaction component B (for example, the "channel chat" interaction component), so that the user in the live streaming uses the same interaction component to interact in the default state, thereby improving the concentration of the interaction component used by the user in the live streaming and improving the interaction effect.

Further, in a possible implementation manner, as shown in FIG. 6, a specific implementation manner of step S102 includes:
Step S1021: receive live stream information sent by a server, the live stream information representing content of a live stream video currently displayed in a live stream page.

Step S1022: determine at least one target interaction component based on the live stream information.

Step S1023: display at least one target interaction component in the second area.

For example, in the live stream data sent by the server (the server running the live stream application server) to the client (the terminal device running the live stream application client) includes live stream information used to represent the content of the live stream video currently displayed in the live stream page, where in the live event live stream application scenario, for example, the live stream information includes live stream event information, the live stream event information represents a live stream event occurring in the live stream video, and the live stream event information is, for example, an identification of the live stream time; the live stream event information is triggered based on the content of the live stream video, and is used to represent an event of a specific content link, for example, if the live stream video played in the target live streaming is a "football game", the live stream event corresponding to the content of the live stream video includes, for example, "goal", "substitute", "foul", "start of first /second half of the game", "end of first /second half of the game ", and the like. The live stream event is triggered based on the content of the live stream video, which means that when the content of the live stream video meets the requirement (for example, a foul and a goal), the server may send live stream information to the client on the one side of the terminal device, and the live stream information may comprise the live stream event information, where the live stream event information represents the identification of the specific live stream event.

Further, a corresponding target live stream event is determined based on the live stream event information in the live stream information, and a target interaction component corresponding to the target live stream event is obtained based on a predetermined mapping relationship. For example, when the received live stream information includes the live stream event information info _ 1, it is determined that the corresponding target live stream event is "start of the game", and at this time, the target interaction component corresponding to the target live stream event is obtained, which is "channel chat", "team information", and "live game data" respectively; when the received live stream information includes the live stream event information info2, it is determined that the corresponding target live stream event is "end of the game", and at this time, the target interaction component corresponding to the target live stream event is obtained, which is "channel chat" and "final game data" respectively.

Certainly, in other possible embodiments, in addition to the live stream event information, the live stream information may further include other information, for example, live streaming information that represents the number of viewers in the live streaming, and the like, thereby further determining a more accurate target live stream event, and the specific implementation manner is described in detail in the subsequent embodiments, and details are not described herein again. According to the embodiment, the target interaction component corresponding to the content of the live stream video is determined and displayed by obtaining the live stream information, and the target interaction component determination manner with high real-time performance and diversity is realized, the rationality of the target interaction component displayed in real time is improved, the concentration degree of the interaction component used by the user in the live streaming is improved, and the interaction effect is improved.

In the foregoing embodiment, in an application scenario in which the device posture of the terminal device is portrait screen state, an implementation manner of displaying the target interaction component in the second area is implemented. In the application scenario of playing the live stream video in the landscape screen in the embodiment shown in FIG. 4, for example, the target interaction component in the second area is not triggered by default, that is, before the terminal device receives the triggering instruction, the component content of the target interaction component is not displayed in the second area. Exemplarily, in the landscape state, the specific implementation manner of step S102 includes:
In step S1023, display the corresponding preview component in the second area according to the content of the live stream video, and the component appearance of the preview component is used to represent the content of the at least one interaction function.

In step S1024, in response to a triggering on the preview component, display the at least one target interaction component in the second area.

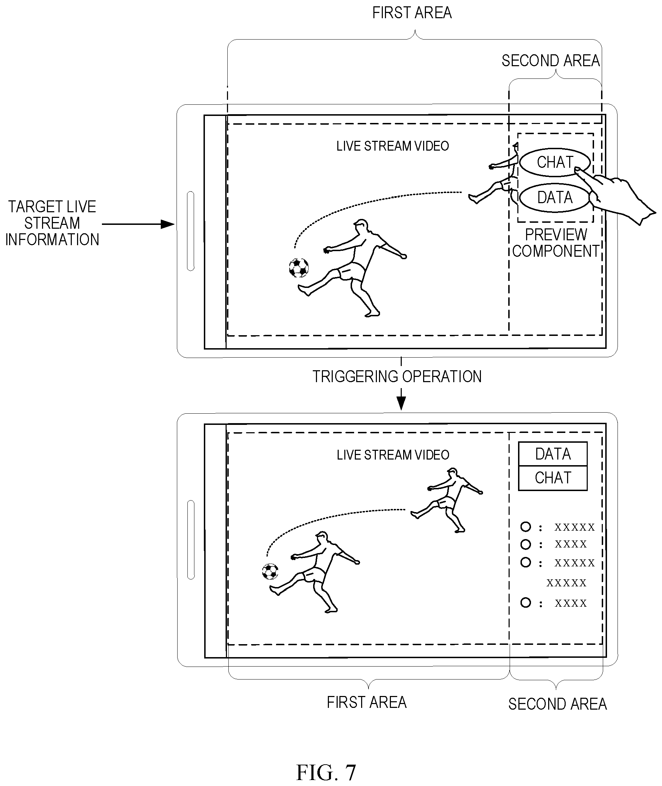

FIG. 7 is a schematic diagram of a process of displaying a target interaction component according to an embodiment of the present disclosure. When the device posture is in a landscape screen state, it matches better with the picture size of the live stream video, for example, when the screen size of the terminal device is the same as the picture size of the live stream video, borderless full screen playing can be achieved, thereby a better sense of the view of the video can be achieved. As shown in FIG. 7, exemplarily, in a landscape screen state, the second area coincides with a portion of the first area, that is, the second area is a sub-area of the first area, and when the live stream video is played through the first area, when the target interaction component needs to be displayed according to the content of the live stream video (the target live stream information corresponding to the target live stream event is received), the preview component suspended above the live stream video is first displayed in the second area (within the first area), thereby reducing the interference of the interaction component to the user watching the live stream video, wherein the component appearance of the preview component is used to represent the content of the at least one interaction function, for example, including the character representing the component name of the interaction component (the component appearance of the preview component in the figure includes "chat" and "data" character). After the user (as required) triggers the preview component, the terminal device displays the target interaction component in the second area in response to the triggering for the preview component, at this time, the first area and the second area no longer overlap, and the second area corresponds to one independent area, thereby better displaying the component content of the target interaction component. The specific implementation manner of determining the target interaction component according to the content of the live stream video in the landscape screen state and displaying the target interaction component in the second area is similar to the above implementation manner of displaying the target interaction component in the second area in the portrait screen state, and details are not described herein again.

In this embodiment, the live stream page is displayed, the live stream page comprises a first area and a second area, wherein the first area is used to display the live stream video; the target interaction component is displayed in the second area according to the content of the live stream video displayed in the first area, and the target interaction component is configured to, after being triggered, perform component functions corresponding to the live stream video. Because the interaction components required by the user are different in different phases of the live stream, the corresponding target interaction component is determined by the content of the live stream video, so that when different live stream videos are played, the corresponding target interaction component is displayed, the purpose of dynamic display of the interaction component in the live stream page is achieved, the interaction efficiency when the user triggers the corresponding interaction component in different phases of the live stream is improved, and the concentration degree of the interaction component triggered by the user in the live streaming is higher, and the direct interaction effect of the user in the live streaming is improved.

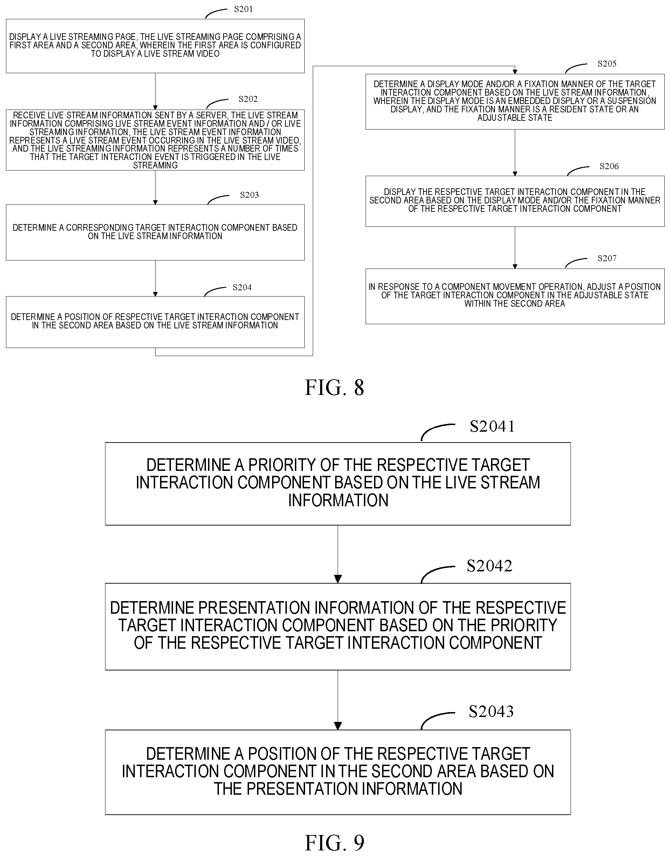

Referring to FIG. 8, FIG. 8 is a schematic flowchart 2 of a method for displaying a live stream page according to an embodiment of the present disclosure. This embodiment is based on the embodiment shown in FIG. 2. Further, the method for determining the target interaction component and displaying the target interaction component in step S102 is further refined, exemplarily, the method for displaying the live stream page includes:
Step S201: display a live stream page, the live stream page comprising a first area and a second area, wherein the first area is configured to display a live stream video.

Step S202: receive live stream information sent by a server, the live stream information comprising live stream event information and / or live streaming information, the live stream event information represents a live stream event occurring in the live stream video, and the live streaming information represents a number of times that the target interaction event is triggered in the live streaming.

Step S203: determine a corresponding target interaction component based on the live stream information.

Exemplarily, in the step of the present embodiment, the content of the live stream video is determined through the live stream information sent by the server, and then the corresponding target interaction component is determined. Wherein, the live stream information comprises live stream event information and live streaming information, wherein the live stream event information may be an identification of a live stream event such as "start of the game" and "end of the game" etc., and a specific implementation manner of determining a corresponding target interaction component based on the live stream event information is described in detail in the embodiment shown in FIG. 2, and details are not described herein again.

For the live streaming information, the live streaming information represents a number of times of triggering a target interaction event in a live streaming for playing the live stream video, where the target interaction event is an event triggered by a user in the live streaming, for example, "like", "follow", "support the selected team", and the like. The target interaction event may be implemented by a corresponding interaction component, the number of times the target interaction event is triggered, to trigger corresponding target interaction component correspondingly, and more specifically, for example, when the number of times of "like" (the target interaction event) reaches thirty thousand, it is determined that the corresponding target interaction component is the interaction component A for participating in "giving virtual gift"; when the number of times of "support" reaches ten thousand, it is determined that the corresponding target interaction component is the interaction component B for participating in the "physical drawing".

Based on this, the corresponding target interaction component may be further determined combining the live stream event information, so as to determine the target interaction component finally displayed in the second area. For example, the target interaction component A is determined based on the live streaming information; and the set target interaction component A and the target interaction component B, and the target interaction component B are determined based on the live stream event information, that is, the target interaction component finally displayed in the second area. Certainly, it may be understood that, in addition to the manner of determining the target interaction component displayed in the second area in combination with the live stream event information and the live streaming information jointly, the target interaction component displayed in the second area may be determined independently based on the live stream event information respectively, or the target interaction component displayed in the second area may be determined independently based on the live streaming information, and the specific implementation manner is similar, and details are not described herein again.

In the embodiment, the corresponding target interaction component is determined through the live stream event information and / or the live streaming information, so that the target interaction component displayed in the second area can be dynamically adjusted according to the competition process and the user engagement degree in the live streaming, so that the interest of users participating in interaction in the live streaming is improved, and the interaction effect is improved.

Step S204: determine a position of respective target interaction component in the second area based on the live stream information.

Further, after the target interaction component is determined, when the target interaction component includes a plurality of target interaction components, the display position of the target interaction component in the second area affects the user's attention degree to respective target interaction component, thereby affecting the trigger probability of the target interaction component.

For example, as shown in FIG. 9, a specific implementation manner of the step S204 comprises:

Step S2041: determine a priority of the respective target interaction component based on the live stream information.

Step S2042: determine presentation information of the respective target interaction component based on the priority of the respective target interaction component.

Step S2043: determine a position of the respective target interaction component in the second area based on the presentation information.

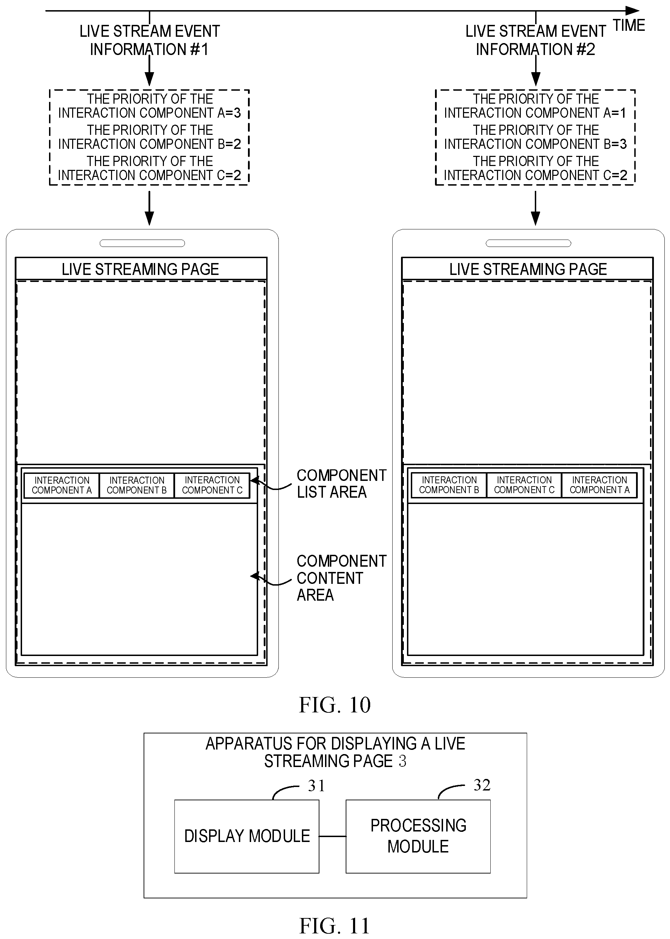

For example, according to the live stream information, for example, the live stream event information, the priority of the respective target interaction component is determined while the respective target interaction component is determined, and then the high-priority target interaction component is arranged at the front position based on the priority of respective target interaction component; and the low-priority target interaction component is arranged at the back position, so as to guide the attention point of the user, so that the concentration of the interaction event participated by the user in the live streaming is higher, and the interaction effect is improved. FIG. 10 is a schematic diagram of determining a position of a target interaction component based on live stream event information according to an embodiment of the present disclosure. As shown in FIG. 10, based on the live stream event information in the live stream information, when the live stream event information is # 1, the represented live stream event is "start of the first half of the game", when the live stream event information is # 2, the represented live stream event is "start of the second half of the game". Correspondingly, the target interaction component corresponding to the live stream event information # 1 is an interaction component A for presenting "AI winner prediction", an interaction component B for presenting "channel chat", and an interaction component C for presenting a "team support rate". The priority of respective target interaction component corresponding to the live stream event information # 1 is: the priority of the interaction component A = 3; the priority of the interaction component B = 2; the priority of the interaction component C = 2; wherein the priority of the interaction component A is the highest, the priority of the interaction component B and the priority of the interaction component C are the same and relatively low, the corresponding presentation order is determined as [interaction component A, interaction component B, interaction component C] according to the priority of respective target interaction component, the position of respective interaction component in the second area may be referred to FIG. 9, the interaction component A with the high priority is arranged on the leftmost side in the component list area of the second area, and the positions of the interaction component B and the interaction component C are set in sequence at latter positions. Further, in a possible implementation manner, the target interaction component with the highest priority (for example, the leftmost side in the component list area) is triggered by default, and the component content of the target interaction component is displayed in the component content area of the second area by default, thereby guiding the focus point of the user in the live streaming. Optionally, in a scenario where the priority of the interaction component B and the priority of the interaction component C are the same, they can be set randomly, or they can be further determined based on the live stream information, specifically, for example, according to the live streaming information in the live stream information, the relative priority of the interaction component B and the interaction component C may be determined, thereby determining the position sequence of the interaction component B and interaction component C in the component list area.

Similarly, the target interaction components corresponding to the live stream event information # 2 are the interaction component A for presenting "AI winner prediction", the interaction component B for presenting "channel chat", and the interaction component C for presenting the "team support rate" (the same as the live stream event information # 1) respectively. Wherein, the priorities of respective target interaction component corresponding to the live stream event information # 2 are: the priority of the interaction component A = 1; the priority of the interaction component B = 3; the priority of the interaction component C = 2; correspondingly, according to the priority of respective target interaction component, it is determined that the corresponding presentation order is [interaction component B, interaction component C, interaction component A], as shown in FIG. 10, at this time, the interaction component B with high priority is arranged on the leftmost side in the component list area of the second area, and the position of the interaction component C and the position of the interaction component A are arranged in sequence at latter positions. In this implementation step, the priority corresponding to respective target interaction component is determined through the live stream information, so that the dynamic arrangement of respective target interaction components in the second area is realized, the demand of the user to perform corresponding interaction in different game phases is better met, and the interaction efficiency and the interaction effect of the live streaming are improved.

Further, the presentation information is further used to represent a time sequence displayed by the target interaction component within a target time period. Before or after step S2043, further includes: determining a time sequence for displaying respective target interaction component within a target time period based on the presentation information.

Exemplarily, the target time period is determined by the presentation information, for example, a time period between the start of the game and the end of the game, wherein the interaction component A is displayed in the second area according to the presentation information after the game starts till the halftime (the first time period); the interaction component B is displayed in the second area after the halftime till the end of the game (the second time period). In this embodiment, the presentation order of the target interaction components in the second area is determined through the presentation information, so that the dynamic display of the interaction components based on the time feature is achieved, and the interaction efficiency of the interaction components is further improved.

Further, in a possible implementation manner, the live stream information includes a streaming duration, and the priority of respective target interaction component is determined based on the streaming duration. Wherein, the streaming duration may refer to a duration after the live streaming is started, or may be a duration that is calculated based on a target live stream event corresponding to the live stream video as a starting point, for example, a duration from "start of the game" till the present. For example, after "start of the game ", at the 10 minute mark of the game, the priority of the interaction component A is 2, the priority of the interaction component B is 1 in the corresponding target interaction components, at the 30 minute mark of the game, the priority of the interaction component A is 1, and the priority of the interaction component B is 2 in the corresponding target interaction component. In the step of the embodiment, the priority of the respective target interaction component is further refined through the streaming duration in the live stream information, so that the purpose of dynamically adjusting the sorting positions of the target interaction components along with the change of the game duration is achieved, the dynamic setting precision of the target interaction component is further improved, the requirement of the user to perform corresponding interaction in different game phases is better met, and the interaction efficiency and the interaction effect of the live streaming are improved.

Step S205: determine a display mode and/or a fixation manner of the target interaction component based on the live stream information, wherein the display mode is an embedded display or a suspension display, and the fixation manner is a resident state or an adjustable state.

Step S206: display the respective target interaction component in the second area based on the display mode and/or the fixation manner of the respective target interaction component.

For example, for the target interaction component, it has a corresponding attribute: a display mode and/or the fixation manner, where the display mode refers to a style in which the target interaction component is displayed in the second area, including an embedded display and a suspension display. Specifically, the embedded display refers to that the target interaction component is embedded in the component list area of the second display area, and the component list area may correspond to one component frame or component panel for bearing a plurality of components. The target interaction component is fixedly disposed in the component frame or the component panel in an embedded manner; the suspension display refers to that the target interaction component is disposed non-fixed in the component list area of the second area, for example, outside the component frame corresponding to the component list area, and may cover the interaction component (making it invisible) in the component list area, thereby achieving a more prominent display effect, to guide the user to trigger. According to the live stream information, after receiving the live stream event information representing the target live stream event comprised in the live stream information sent by the server, the display mode of one target interaction component is configured as a suspension display, and more specifically, the target live stream event corresponding to the live stream information is, for example, "goal", the target interaction component A is then configured as a suspension display; and the target interaction component B is configured as an embedded display.

Further, the fixation manner is another attribute of the target interaction component, referring to a manner in which the target interaction component responds to the switch component. The fixation manner corresponding to the target interaction component may be determined according to the live stream information based on a predetermined mapping relationship, and the specific implementation manner is similar to the manner of determining the display mode, and details are not described herein again.

Step S207: in response to a component movement operation, adjust a position of the target interaction component in the adjustable state within the second area.

Exemplarily, the component list area of the second area includes at least two target interaction components, and a display mode of which is an embedded display, that is, the at least two target interaction components are fixedly disposed in a component frame of the component list area in an embedded fixation manner, where, for example, the fixation manner of the target interaction component A is a resident state, and the fixation manner of the target interaction component B is an adjustable state. After the terminal device receives the long-press gesture for the target interaction component in the component frame, the target interaction component B in the adjustable state may move its position in the second area in response to the drag gesture (the component movement operation), and more specifically, for example, move the target interaction component from the second place on left side to the first place on the left side.

In the embodiment, the fixation manner of the target interaction component is determined according to the live stream information, and the position of the target interaction component in the adjustable state is adjusted according to the component movement operation, so that the personalized operation requirement of the user is met; meanwhile, since the position of the target interaction component in the resident state is not movable, the presentation of the key component related to the content of the live stream video and the user in the live stream page is ensured, so that the concentration degree of the interaction component used by the user in the live streaming is ensured, the user participation degree is improved, and the user interaction effect in the live event live stream scenario is improved.

**In** this embodiment, the implementation manner of step S210 is the same as the implementation manner of step S101 in the embodiment shown in FIG. 2 of the present disclosure, and details are not described herein again.

Corresponding to the method for displaying a live stream page in the foregoing embodiment, FIG. 11 is a structural block diagram of an apparatus for displaying a live stream page according to an embodiment of the present disclosure. For ease of illustration, only portions related to embodiments of the present disclosure are shown. Referring to FIG. 11, an apparatus for displaying a live stream page includes:
a display module 31 configured to display a live stream page, the live stream page comprising a first area and a second area, wherein the first area is configured to display a live stream video;
a processing module 32 configured to display a target interaction component in the second area based on content of the live stream video displayed in the first area, the target interaction component being configured to perform, after triggered, a component function corresponding to the live stream video.

In an embodiment of the present disclosure, the processing module 31 is specifically configured to: obtain live stream information, the live stream information representing the content of the live stream video currently displayed in the live stream page; determine at least one target interaction component based on the live stream information; and display the at least one target interaction component in the second area.

In an embodiment of the present disclosure, the live stream information comprises live stream event information, the live stream event information represents a live stream event occurring in the live stream video; and when determining the at least one target interaction component based on the live stream information, the processing module 31 is specifically configured to: determine the target interaction component based on a target live stream event corresponding to the live stream event information in the live stream information.

In an embodiment of the present disclosure, the live stream information comprises live streaming information, the live streaming information represents a number of times a target interaction event is triggered in the live streaming; when determining the target interaction component based on the target live stream event corresponding to the live stream event information in the live stream information, the processing module 31 is specifically configured to: determine, based on the live streaming information in the live stream information, a target number of times for triggering the target interaction event in the live streaming corresponding to the live stream page; and determine the target interaction component based on the target number of times for triggering the target interaction event and the target live stream event corresponding to the live stream event information.

In an embodiment of the present disclosure, the processing module 31 is further configured to: determine a priority of the respective target interaction component based on the live stream information; determine presentation order of the respective target interaction component based on the priority of the respective target interaction component; determine the position of the respective target interaction component in the second area based on the presentation order.

In an embodiment of the present disclosure, the live stream information comprises a streaming duration of the live stream video; and when determining the priority of the respective target interaction component based on the live stream information, the processing module 31 is specifically configured to determine the priority of the respective target interaction component based on the streaming duration.

In an embodiment of the present disclosure, after determining the at least one target interaction component based on the live stream information, the processing module 31 is further configured to determine a display mode of the target interaction component based on the live stream information, wherein the display mode is an embedded display or a suspension display.

When the processing module 31 displays the at least one target interaction component in the second area it is specifically configured to: display the respective target interaction component in the second area based on the display mode of the respective interaction component.

In an embodiment of the present disclosure, after determining the at least one target interaction component according to the live stream information, the processing module 31 is further configured to: determine a fixation manner of the target interaction component based on the live stream information, wherein the fixation manner is a resident state or an adjustable state; and in response to a component movement operation, adjust a position of the target interaction component in the adjustable state within the second area.

In an embodiment of the present disclosure, the processing module 31 is specifically configured to: display a corresponding preview component in a second area according to the content of the live stream video, the component appearance of the preview component being used to represent content of at least one interaction function; and in response to a triggering on the preview component, displaying the at least one target interaction component in the second area.

The display module 31 is connected to the processing module 32. The apparatus for displaying a live stream page 3 provided in this embodiment may perform the technical solutions of the foregoing method embodiments, and implementation principles and technical effects thereof are similar, and details are not described herein again in this embodiment.

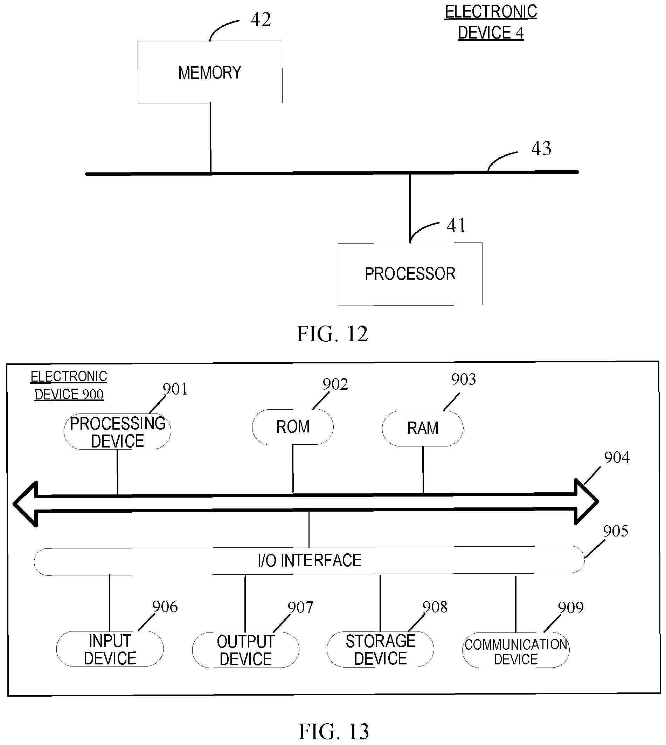

FIG. 12 is a schematic structural diagram of an electronic device according to an embodiment of the present disclosure.

A processor 41, and a memory 42 communicatively connected to the processor 41;
the memory 42 storing computer-executable instructions;
the processor 41 executing the computer-executable instruction stored in the memory 42 to implement the method for displaying a live stream page in the embodiments shown in FIG. 2 to FIG. 10.

Optionally, the processor 41 and the memory 42 are connected by using a bus 43.

Related descriptions may be understood with reference to related descriptions and effects corresponding to the steps in the embodiments corresponding to FIG. 2 to FIG. 10, and details are not described herein again.

Referring to FIG. 13, FIG. 13 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 13 is merely an example, and should not impose any limitation on the functions and scope of use of the embodiments of the present disclosure.

As shown in FIG. 13, the electronic device 900 may include a processing device (for example, a central processing unit, a graphics processor, etc.) 901, which may perform various appropriate actions and processing according to a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. Input / output (I / O) interface 905 is also connected to bus 904.

Generally, the following devices may be connected to the I / O interface 905: an input device 906 including, for example, a touch screen, a touch pad, a keyboard, a mouse, a camera, a microphone, an accelerometer, a gyroscope, etc.; an output device 907 including, for example, a liquid crystal display (LCD), a speaker, a vibrator, etc. ; a storage device 908 including, for example, a magnetic tape, a hard disk, etc.; and a communication device 909. The communication device 909 may allow the electronic device 900 to communicate wirelessly or wired with other devices to exchange data. While FIG. 13 shows an electronic device 900 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 909, or installed from the storage device 908, or from the ROM 902. When the computer program is executed by the processing device 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the scenario of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. Wherein the name of the unit do not construct any limitation on the unit itself in certain situations. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, a method for displaying a live stream page is provided according to one or more embodiments of the present disclosure, comprising:

displaying a live stream page, the live stream page comprising a first area and a second area, wherein the first area is configured to display a live stream video; and displaying a target interaction component in the second area based on content of the live stream video displayed in the first area, the target interaction component being configured to perform, after triggered, a component function corresponding to the live stream video.

According to one or more embodiments of the present disclosure, displaying the target interaction component in the second area based on the content of the live stream video displayed in the first area comprises: obtaining live stream information, the live stream information representing the content of the live stream video currently displayed in the live stream page; determining at least one target interaction component based on the live stream information; and displaying the at least one target interaction component in the second area.

According to one or more embodiments of the present disclosure, the live stream information comprises live stream event information, the live stream event information represents a live stream event occurring in the live stream video; and determining the at least one target interaction component based on the live stream information comprises: determining the target interaction component based on a target live stream event corresponding to the live stream event information in the live stream information.

According to one or more embodiments of the present disclosure, the live stream information comprises live streaming information, the live streaming information represents a number of times a target interaction event is triggered in the live streaming; and determining the at least one target interaction component based on the live stream information comprises: determining, based on the live streaming information in the live stream information, a target number of times for triggering the target interaction event in the live streaming corresponding to the live stream page; and determining the target interaction component based on the target number of times for triggering the target interaction event and the target live stream event corresponding to the live stream event information.

According to one or more embodiments of the present disclosure, the method further comprises: determining a priority of the respective target interaction component based on the live stream information; determining a presentation order of the respective target interaction component based on the priority of the respective target interaction component; and determining a position of the respective target interaction components in the second area based on the presentation order.

According to one or more embodiments of the present disclosure, the live stream information comprises a streaming duration of the live stream video; and determining the priority of the respective target interaction component based on the live stream information comprises: determining the priority of the respective target interaction component based on the streaming duration.

According to one or more embodiments of the present disclosure, after determining the at least one target interaction component based on the live stream information, further comprises: determining a display mode of the target interaction component based on the live stream information, wherein the display mode is an embedded display or a suspension display; and displaying the at least one target interaction component in the second area, comprises: displaying the respective target interaction component in the second area based on the display mode of the respective target interaction component.

According to one or more embodiments of the present disclosure, after determining the at least one target interaction component based on the live stream information, further comprises: determining a fixation manner of the target interaction component based on the live stream information, wherein the fixation manner is a resident state or an adjustable state; and in response to a component movement operation, adjusting a position of the target interaction component in the adjustable state within the second area.

According to one or more embodiments of the present disclosure, displaying the target interaction component in the second area based on the content of the live stream video comprises: displaying a corresponding preview component in the second area based on the content of the live stream video, the component appearance of the preview component representing content of at least one interaction function; and in response to a triggering on the preview component, displaying the at least one target interaction component in the second area.

In a second aspect, according to one or more embodiments of the present disclosure, there is provided an apparatus for displaying a live stream page, comprising:
a display module configured to display a live stream page, the live stream page comprising a first area and a second area, wherein the first area is configured to display a live stream video;
a processing module configured to display a target interaction component in the second area based on content of the live stream video displayed in the first area, the target interaction component being configured to perform, after triggered, a component function corresponding to the live stream video.

According to one or more embodiments of the present disclosure, the processing module is specifically configured to: obtain live stream information, the live stream information representing the content of the live stream video currently displayed in the live stream page; determine at least one target interaction component based on the live stream information; and display the at least one target interaction component in the second area.

According to one or more embodiments of the present disclosure, the live stream information comprises live stream event information, the live stream event information represents a live stream event occurring in the live stream video; and when determining the at least one target interaction component based on the live stream information, the processing module is specifically configured to: determine the target interaction component based on a target live stream event corresponding to the live stream event information in the live stream information.

According to one or more embodiments of the present disclosure, the live stream information comprises live streaming information, the live streaming information represents a number of times a target interaction event is triggered in the live streaming; and when determining the at least one target interaction component based on the live stream information, the processing module is specifically configured to: determine, based on the live streaming information in the live stream information, a target number of times for triggering the target interaction event in the live streaming corresponding to the live stream page; and determine the target interaction component based on the target number of times for triggering the target interaction event and the target live stream event corresponding to the live stream event information.

According to one or more embodiments of the present disclosure, the processing module is further configured to: determine a priority of the respective target interaction component based on the live stream information; determine a presentation order of the respective target interaction component based on the priority of the respective target interaction component; and determine a position of the respective target interaction components in the second area based on the presentation order.

According to one or more embodiments of the present disclosure, the live stream information comprises a streaming duration of the live stream video; and when determining the priority of the respective target interaction component based on the live stream information, the processing module is specifically configured to: determine the priority of the respective target interaction component based on the streaming duration.

According to one or more embodiments of the present disclosure, after determining the at least one target interaction component based on the live stream information, the processing module is further configured to: determine a display mode of the target interaction component based on the live stream information, wherein the display mode is an embedded display or a suspension display; and when the processing module displays at least one target interaction component in the second area, the processing module is specifically configured to: display the respective target interaction component in the second area based on the display mode of the respective target interaction component.

According to one or more embodiments of the present disclosure, after determining the at least one target interaction component based on the live stream information, the processing module is further configured to: determine a fixation manner of the target interaction component based on the live stream information, wherein the fixation manner is a resident state or an adjustable state; and in response to a component movement operation, adjust a position of the target interaction component in the adjustable state within the second area.

According to one or more embodiments of the present disclosure, the processing module is specifically configured to: display a preview component in the second area based on the content of the live stream video, a component appearance of the preview component representing content of at least one interaction function; and in response to a triggering on the preview component, display the at least one target interaction component in the second area.

According to a third aspect, an electronic device is provided according to one or more embodiments of the present disclosure, including: a processor, and a memory communicatively connected to the processor;
the memory storing computer-executable instructions;
the processor executing the computer-executable instructions stored in the memory to implement the method for displaying a live stream page according to the first aspect and various possible designs of the first aspect.

According to a fourth aspect, a computer-readable storage medium is provided according to one or more embodiments of the present disclosure, the computer-readable storage medium stores a computer-executable instructions, and when the processor executes the computer-executable instructions, the method for displaying a live stream page according to the first aspect and the possible designs of the first aspect is implemented.

According to a fifth aspect, an embodiment of the present disclosure provides a computer program product, comprising a computer program, wherein the computer program, when executed by a processor, implements the method for displaying a live stream page according to the first aspect and various possible designs of the first aspect.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

## Claims

1. A method for displaying a live stream page, **characterized by** comprising:
displaying a live stream page, the live stream page comprising a first area and a second area, wherein the first area is configured to display a live stream video; and
displaying a target interaction component in the second area based on content of the live stream video displayed in the first area, the target interaction component being configured to perform, after triggered, a component function corresponding to the live stream video.

2. The method of claim 1, **characterized in that** displaying the target interaction component in the second area based on the content of the live stream video displayed in the first area comprises:
obtaining live stream information, the live stream information representing the content of the live stream video currently displayed in the live stream page;
determining at least one target interaction component based on the live stream information;
displaying the at least one target interaction component in the second area.

3. The method of claim 2, **characterized in that** the live stream information comprises live stream event information, the live stream event information represents a live stream event occurring in the live stream video; and determining the at least one target interaction component based on the live stream information comprises:
determining the target interaction component based on a target live stream event corresponding to the live stream event information in the live stream information.

4. The method of claim 3, **characterized in that** the live stream information further comprises live streaming information, the live streaming information represents a number of times a target interaction event is triggered in the live streaming; and determining the target interaction component based on the target live stream event corresponding to the live stream event information in the live stream information comprises:
determining, based on the live streaming information in the live stream information, a target number of times for triggering the target interaction event in the live streaming corresponding to the live stream page;
determining the target interaction component based on the target number of times for triggering the target interaction event and the target live stream event corresponding to the live stream event information.

5. The method of claim 2, **characterized in that** the method further comprises:
determining a priority of the respective target interaction component based on the live stream information; and
determining presentation information of the respective target interaction component based on the priority of the respective target interaction component, the presentation information representing a display position of the target interaction component in the second area, and/or a time sequence for displaying the target interaction component within a target time period.

6. The method of claim 5, **characterized in that** the live stream information comprises a streaming duration of the live stream video; and determining the priority of the respective target interaction component based on the live stream information comprises:
determining the priority of the respective target interaction component based on the streaming duration.

7. The method of claim 2, **characterized in that** after determining the at least one target interaction component based on the live stream information, further comprises:
determining a display mode of the target interaction component based on the live stream information, wherein the display mode is an embedded display or a suspension display;
displaying the at least one target interaction component in the second area, comprises:
displaying the respective target interaction component in the second area based on the display mode of the respective target interaction component.

8. The method of claim 2, **characterized in that** after determining the at least one target interaction component based on the live stream information, further comprises:
determining a fixation manner of the target interaction component based on the live stream information, wherein the fixation manner is a resident state or an adjustable state; and
in response to a component movement operation, adjusting a position of the target interaction component in the adjustable state within the second area.

9. The method of any of claims 1 to 8, **characterized in that** displaying the target interaction component in the second area based on the content of the live stream video comprises:
displaying a preview component in the second area based on the content of the live stream video; and
in response to a triggering on the preview component, displaying the at least one target interaction component in the second area.

10. An apparatus for displaying a live stream page, **characterized by** comprising:
a display module configured to display a live stream page, the live stream page comprising a first area and a second area, wherein the first area is configured to display a live stream video; and
a processing module configured to display a target interaction component in the second area based on content of the live stream video displayed in the first area, the target interaction component being configured to perform, after triggered, a component function corresponding to the live stream video.

11. An electronic device, **characterized by** comprising: a processor, and a memory communicatively connected to the processor;
the memory storing computer-executable instructions;
the processor executing the computer-executable instructions stored in the memory to implement the method for displaying a live stream page according to any of claims 1 to 9.

12. A computer-readable storage medium, **characterized in that** the computer-readable storage medium stores computer-executable instructions, the computer-executable instructions, when executed by a processor, implement the method for displaying a live stream page according to any of claims 1 to 9.

13. A computer program product, **characterized by** comprising a computer program, wherein the computer program, when executed by a processor, implements the method for displaying a live stream page according to any of claims 1 to 9.
